# EUROPÄISCHE PATENTSCHRIFT

(11) **EP 1 602 538 B1**
(45) Veröffentlichungstag und Bekanntmachung des Hinweises auf die Patenterteilung: **20.03.2013**
(21) Anmeldenummer: 05011991.6
(22) Anmeldetag: 03.06.2005
(51) Int. Cl.: B60R 25/02

(54) **Elektrische Lenkungsverriegelung, insbesondere für ein Kraftfahrzeug**
Electric steering lock, particularly for vehicle.
Verrou electrique de direction, en particulier pour véhicule.

(30) Priorität: 05.06.2004 DE 102004027607; 05.06.2004 DE 102004027608
(43) Veröffentlichungstag der Anmeldung: 07.12.2005
(73) Patentinhaber: Marquardt GmbH, 78604 Rietheim-Weilheim (DE)
(72) Erfinder: Stauss, Gerd, 72488 Sigmaringen (DE); Schwarz, Thomas, 78628 Wurmlingen (DE); Mateja, Darius, 78594 Gunningen (DE)
(74) Vertreter: Otten, Roth, Dobler & Partner

(56) Entgegenhaltungen:
- EP-A- 0 095 146
- DE-A1- 3 213 719
- DE-A1- 10 344 415
- DE-C1- 10 129 095
- US-B1- 6 268 790

## Beschreibung

Die Erfindung betrifft eine elektrische Lenkungsverriegelung nach dem Oberbegriff des Patentanspruchs 1.

Derartige Lenkungsvernegelungen dienen zum Verriegeln der Lenksäule in einem Kraftfahrzeug, um den Diebstahlschutz zu erhöhen. Sie werden insbesondere bei Betätigung des Zündschlosses im Kraftfahrzeug ver- und/oder entriegelt.

In Kraftfahrzeugen kann anstelle eines mechanischen Zündschlosses ein elektronisches Zündschloß verwendet werden. Zur näheren Ausgestaltung eines elektronischen Zündschlosses wird auf die DE 44 34 587 A1 verwiesen. Bei einem elektronischen Zündschloß kann auch die Lenkungsverriegelung durch einen Elektromotor angetrieben werden. Der Elektromotor wird nur dann angesteuert, wenn die codierten Daten des elektronischen Schlüssels richtig sind. Es handelt sich bei einer derartigen Lenkungsverriegelung um eine sogenannte elektrische Lenkungsverriegelung.

Aus der DE 37 39 172 C1 oder der DE 101 29 095 C1 ist eine solche elektrische Lenkungsverriegelung für ein Kraftfahrzeug bekannt, die ein zwischen einer ersten und einer zweiten Position bewegbares Sperrglied zur Verriegelung der Lenkwelle bei abgezogenem Schlüssel aufweist. Das Sperrglied ist in der ersten Position in verriegelnden Eingriff mit einer Einrastposition an der Lenkwelle in der Lenkradsäule bringbar und steht in der zweiten Position außer Eingriff mit der Einrastposition. Die Lenkungsverriegelung besitzt einen einen Elektromotor aufweisenden, von der Batterie im Kraftfahrzeug mit elektrischer Spannung versorgten Antrieb für die Bewegung des Sperrglieds. Bei weiteren Lenkungsverriegelungen ist noch bekannt, mehrere Einrastpositionen für das Sperrglied zum Sperren der Lenkwelle vorzusehen, wobei diese Einrastpositionen beispielsweise in der Art eines an der Lenkwelle befindlichen Zahnkranzes, Schließrings o. dgl. ausgestaltet sind.

Zur Gewährleistung der Diebstahlsicherheit ist es notwendig, daß die Lenkungsverriegelung hohe Kräfte, beispielsweise durch Gewalteinwirkung einer unberechtigten Person, aufnehmen kann. Hierfür sind entsprechend dimensionierte, massive Bauteile für die Lenkungsverriegelung notwendig, was deren Kosten, Gewicht, Bauraum im Kraftfahrzeug o. dgl. erhöht.

Aus der DE 103 44 415 A1 ist weiter eine elektrisch betätigte Lenkungsverriegelung mit einem Sperrglied bekannt, das aus zwei schwenkbar gelagerten Schwenkhebeln besteht. Die beiden Schwenkhebel sind zur Verriegelung in Richtung der Lenkwelle bewegbar, derart daß jeweils ein abstehender Teil an den Schwenkhebeln zur Verriegelung in eine als Einrastposition dienende Ausnehmung an der Lenkwelle eingreifen kann. Die Schwenkhebel werden mittels eines Elektromotors als Antrieb bewegt. Die abstehenden Teile an den beiden Schwenkhebeln sind gleich lang und greifen in verriegelnder Position gleichzeitig in die Ausnehmung an der Lenkwelle ein. Dabei besteht die Gefahr des Verklemmens der Lenkungsverriegelung. Vergleichbare elektrische Lenkungsverriegelungen sind auch in der EP 0 095 146 A1 sowie in der DE 32 13 719 A1 gezeigt.

Der Erfindung liegt die Aufgabe zugrunde, die Lenkungsverriegelung einfacher auszugestalten, wobei jedoch eine hohe Diebstahlsicherheit gewährleistet sowie ein eventuelles Verklemmen der Lenkungsverriegelung verhindert sein soll.

Diese Aufgabe wird bei einer gattungsgemäßen elektrischen Lenkungsverriegelung durch die kennzeichnenden Merkmale des Anspruchs 1 gelöst.

Bei der erfindungsgemäßen Lenkungsverriegelung besteht das Sperrglied aus zwei schwenkbar gelagerten Schwenkhebeln, die insbesondere in der Art von Schwenkblechen ausgestaltet sind. Die beiden Schwenkhebel sind zur Verriegelung in Richtung der Lenkwelle bewegbar. Desweiteren sind die beiden Schwenkhebel unterschiedlich lang, und zwar derart daß in der Einrastposition lediglich einer der Schwenkhebel in verriegelnden Eingriff mit der Lenkwelle steht. Diese Ausgestaltung stellt sicher, daß in verriegelnder Position jeweils einer der beiden Schwenkhebel für jede Drehrichtung an der Lenkwelle sperrt und daß das über die Drehung aufgebracht Drehmoment sicher in das Gehäuse der Lenkungsverriegelung eingeleitet wird. Dennoch kann aufgrund der unterschiedliche Länge der beiden Schwenkhebel das Lenkrad einen gewissen Bereich gedreht werden, bis die andere Drehrichtung gesperrt wird, so daß ein eventuelles Verklemmen der Lenkungsverriegelung verhindert ist. Weitere Ausgestaltungen der Erfindung sind Gegenstand der Unteransprüche.

In weiterer Ausgestaltung ist vorgesehen, daß der Schwenkhebel zur Aktivierung der Verriegelung mittels eines Hubzylinders und einer Druckfeder in Richtung der Lenkwelle, und zwar insbesondere in eine verriegelte Position bewegt wird. Zur Deaktivierung der Verriegelung wird der Hubzylinder entgegen der von der Druckfeder ausgeübten Kraft von dem Schwenkhebel, und zwar insbesondere in eine entriegelte Position wegbewegt. Vorteilhafterweise bietet diese Ausgestaltung eine sehr kompakte Anordnung für den Antrieb des Schwenkhebels.

In einer einfachen sowie kostengünstigen und dennoch sehr funktionssicheren Ausbildung ist der Schwenkhebel als ein zweiarmiger Hebel ausgestaltet. Im Hubzylinder ist ein Betätiger schwenkbar gelagert, derart daß der Betätiger zur Verriegelung mittels des Hubzylinders gegen das Ende des einen Hebelarms des Schwenkhebels gedrückt wird.

Desweiteren kann zur Bewegung des Hubzylinders zwischen der verriegelten und der entriegelten Position eine Hubkurve vorgesehen sein. Zweckmäßigerweise handelt es sich dabei um eine doppelte Hubkurve, so daß der Antrieb für den Schwenkhebel sowohl zum Ver- als auch Entriegeln stets in dieselbe Richtung bewegt wird, was wiederum dessen Ansteuerung vereinfacht. Zum Antrieb der Hubkurve eignet sich ein Elektromotor, beispielsweise ein Gleichstrommotor. Der Elektromotor kann über ein Getriebe, bei dem es sich beispielsweise um ein aus einer Schnecke sowie einem Schneckenrad bestehendes Schneckengetriebe handelt, auf die Hubkurve einwirken, womit ein Elektromotor von entsprechend geringer Leistung ausreichend ist. Die Hubkurve befindet sich am Innenumfang des in der Art eines Rotors ausgestalteten Schneckenrades. Eine solche Ausbildung zeichnet sich trotz deren Kompaktheit durch eine hohe Funktionssicherheit aus.

Aus Sicherheitsgründen muß während der Fahrt des Kraftfahrzeugs ausgeschlossen werden, daß der Elektromotor angesteuert wird und die Lenkradsäule verriegelt wird. Denn eine verriegelte Lenkung könnte während der Fahrt zu einem Unfall führen und das Leben der Kraftfahrzeuginsassen wäre in Gefahr. Um eine solche Fehlfunktion durch ungewolltes Verriegeln der Lenkwelle während der Fahrt zu verhindern, können die beiden Schwenkhebel mittels Nocken in der entriegelten Position gehalten und/oder gesichert sein. Die Nocken befinden sich zweckmäßigerweise am Schneckenrad, und zwar an dessen Außenumfang.

Der ordnungsgemäßen Funktion halber sowie auch aus Sicherheitsgründen sollte der jeweilige Zustand der Lenkungsverriegelung bekannt sein. Hierzu bietet es sich an, daß die verriegelte und/oder die entriegelte Position mittels Hallsensoren, elektrischen Schaltern, Schnappschaltern o. dgl. detektiert wird.

Bei der erfindungsgemäßen Lenkungsverriegelung können die Schwenkhebel in einem in der Art eines Führungskastens ausgestalteten, aus Metall bestehenden Gehäuse, das wiederum an der Lenkradsäule befestigt ist oder auch direkter, integrierter Bestandteil der Lenkradsäule sein kann, angeordnet sein. Dieser Teil der Lenkungsverriegelung läßt sich folglich im Kraftfahrzeug bei dessen Herstellung vormontieren. Anschließend kann dann der aus dem Elektromotor, dem Getriebe, dem Hubzylinder sowie dem Betätiger bestehende Antrieb als separates Bauteil in das Gehäuse eingesetzt werden. Wird bei verriegelter Lenkungsverriegelung ein Drehmoment über das Lenkrad aufgebracht, so sperrt der Schwenkhebel die Drehbewegung und leitet die durch das Drehmoment bewirkte Kraft sicher in den Führungskasten ein. Vorteilhafterweise werden folglich die Abstützkräfte direkt in den Führungskasten eingeleitet, so daß für den Antrieb keine Metallteile benötigt werden. Vielmehr genügt es, wenn der Antrieb als separates Bauteil ein Kunststoffgehäuse besitzt.

Bei der erfindungsgemäßen Lenkungsverriegelung entsprechend einer weiteren Ausbildung wird der Elektromotor mittels Spannungspulsen in der Art einer Pulsweitenmodulation angesteuert. Insbesondere erfolgt diese Spannungsversorgung durch Pulsweitenmodulation derart, daß am Elektromotor eine vorgebbare, in Bezug auf die Batteriespannung reduzierte Grenzspannung anliegt. Aufgrund der reduzierten Spannung können vorteilhafterweise die mechanischen Komponenten in der Lenkungsverriegelung ohne Beeinträchtigung der Funktions- und/oder Diebstahlsicherheit schwächer dimensioniert werden.

Zweckmäßigerweise kann die am Elektromotor jeweils anliegende elektrische Spannung ausgewertet werden. Hierfür bietet sich die in der Lenkungsverriegelung befindlich Elektronik zur Ansteuerung des Elektromotors an. Beispielsweise kann es sich bei dieser Elektronik um einen Mikroprozessor handeln. Gleichzeitig kann mittels der Elektronik die Reduzierung der elektrischen Spannung am Elektromotor auf die Grenzspannung erfolgen.

In Versuchen hat es sich als zweckmäßig herausgestellt, wenn die am Elektromotor anliegende Grenzspannung mittels Pulsweitenmodulation auf ca. 9 V begrenzt wird.

Die mit der Erfindung erzielten Vorteile bestehen insbesondere darin, daß bei der erfindungsgemäßen Lenkungsverriegelung mehrere Sperrpositionen für die Lenkwelle, und zwar ca. 30 bis 35 Sperrpositionen, realisiert werden können. Dadurch kann die Sperre in nahezu allen Stellungen der Lenkwelle einrasten, so daß das als lästig empfundene Drehen des Lenkrades durch den Benutzer bis zum Einrasten der Lenkungsverriegelung entfällt. Durch die Anordnung der Schwenkhebel werden die Abstützkräfte direkt in den als Gehäuse dienenden Führungskasten eingeleitet. Somit werden - anders als bisher - keine massive Zink-Druckguß-Teile, die entsprechend teuer sind, in der Lenkungsverriegelung benötigt. Damit ist die erfindungsgemäße Lenkungsverriegelung bei zumindest gleicher Funktions- und/oder Diebstahlsicherheit erheblich kostengünstiger.

Die weiteren mit der Erfindung erzielten Vorteile bestehen insbesondere darin, daß die mechanisch beanspruchten Bauteile in der Lenkungsverriegelung, und zwar auch das Getriebe für den Antrieb sowie die sonstigen Antriebselemente, bei gleicher Funktionssicherheit schwächer dimensioniert werden können. Dadurch läßt sich wiederum die Lenkungsverriegelung kostengünstiger herstellen.

Vorteilhafterweise läßt sich für den Antrieb der Lenkungsverriegelung auch ein kleinerer Elektromotor einsetzen, was wiederum einen kleineren Bauraum für den Antrieb ermöglicht. Ein kleiner Motor besitzt eine geringere Stromaufuahme, so daß in kostengünstiger Weise der Einsatz von MOSFET-Halbleiterschaltern anstelle der bisher üblichen Relais für die Ansteuerung der Lenkungsverriegelung ermöglicht ist. Da weniger Strom fließt, sind auch keine breiten Leiterbahnen auf der die Elektronik für den Elektromotor aufnehmenden Leiterplatte nötig, so daß das Layout für die Leiterplatte in kostengünstiger Weise modifiziert und/oder vereinfacht werden kann.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine am Lenkrad angeordnete elektrische Lenkungsverriegelung,
- Fig. 2: die Lenkungsverriegelung aus Fig. 1 in perspektivischer Ansicht und mit durchsichtigem Gehäuse,
- Fig. 3: einen Schnitt durch die Lenkungsverriegelung gemäß Fig. 1, wobei diese im entriegelten Zustand befindlich ist,
- Fig. 4: einen Schnitt durch die Lenkungsverriegelung gemäß Fig. 1, wobei diese im verriegelten Zustand befindlich ist,
- Fig. 5: der Antrieb der Lenkungsverriegelung als Einzelheit und
- Fig. 6: den Aufbau der Lenkungsverriegelung in einzelnen Komponenten.

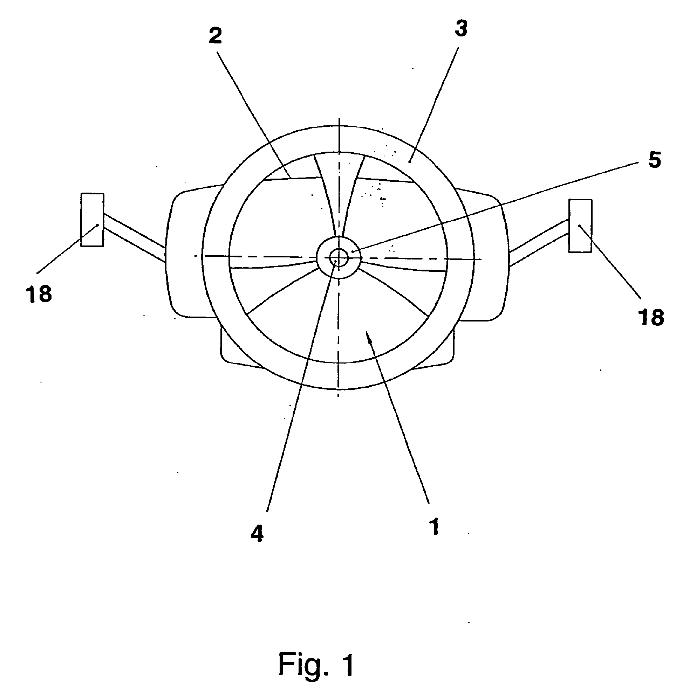

In Fig. 1 ist eine elektrische Lenkungsverriegelung 1 für ein Kraftfahrzeug gezeigt, die zum Sperren der Lenkwelle 4 in der Lenkradsäule 5 dient, und in der Art eines Moduls mit einem Gehäuse 2 ausgestaltet ist. Das Gehäuse 2 ist in der unmittelbaren Nähe des Lenkrades 3 im Kraftfahrzeug angeordnet, und zwar ist das Gehäuse 2 an der die Lenkwelle 4 für das Lenkrad 3 aufnehmenden Lenkradsäule 5 befestigt. Im und/oder am Gehäuse 2 können noch weitere Komponenten, beispielsweise Lenkstockschalter 18, angeordnet sein, was jedoch im weiteren nicht näher betrachtet ist.

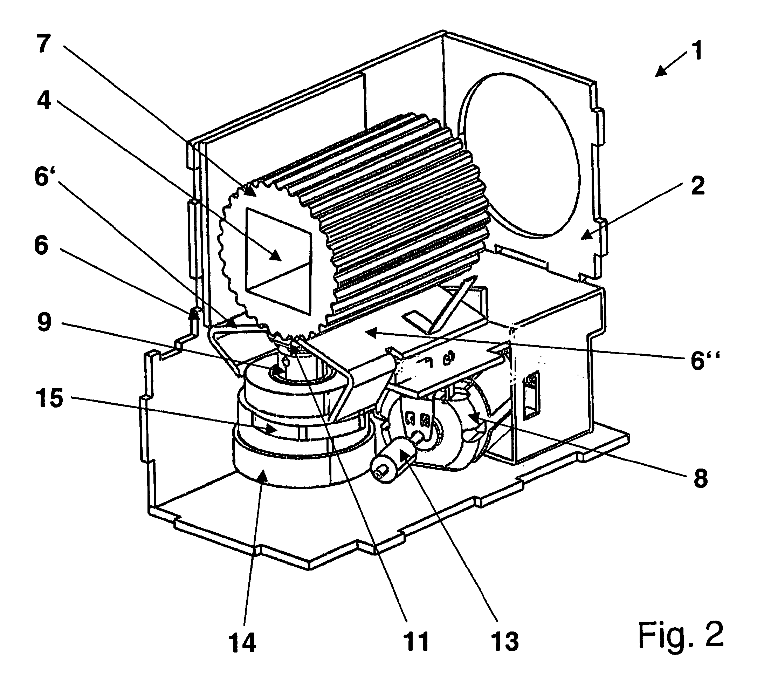

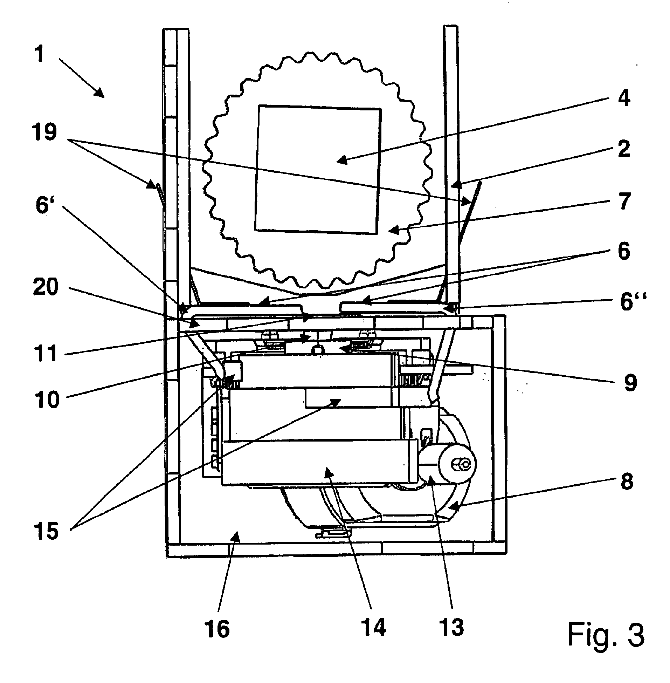

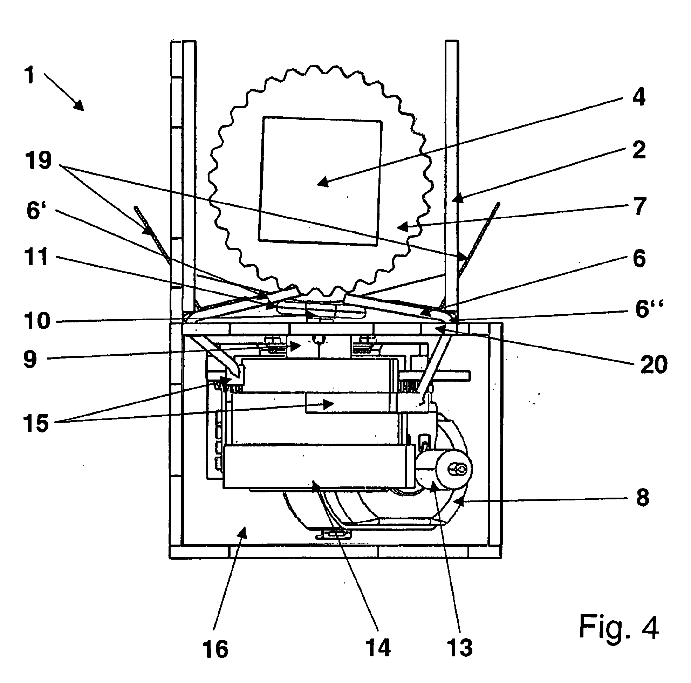

Wie näher in der Fig. 2 zu sehen ist, besitzt die Lenkungsverriegelung 1 ein bewegbares Sperrglied 6, das in oder außer verriegelnden Eingriff mit einer Einrastposition an der Lenkwelle 4 bringbar ist. Die entriegelte Position des Sperrglieds 6 ist in Fig. 3 und die verriegelte Position in Fig. 4 gezeigt. Um ein Einrasten des Lenkrades 3 beim Verriegeln in fast beliebiger Stellung zu ermöglichen, besitzt das Sperrglied 6 mehrere Einrastpositionen für das Sperren der Lenkwelle 4. Hierzu befindet sich an der Lenkwelle 4 eine Art von Zahnkranz, Schließring 7 o. dgl., in den das Sperrglied 6 eingreifen kann. Der Schließring 7 kann ca. 30 bis 35 Einrastpositionen aufweisen. Ein Elektromotor 8, der von der Batterie im Kraftfahrzeug mit Spannung versorgt wird, dient als Antrieb für die Bewegung des Sperrglieds 6.

Das Sperrglied 6 besteht aus zwei schwenkbar im Gehäuse 2 gelagerten Schwenkhebeln 6', 6" in der Art von Schwenkblechen. Mit Hilfe des Elektromotors 8 sind die beiden Schwenkhebel 6', 6" in Richtung der Lenkwelle 4 bewegbar. Dabei werden die Schwenkhebel 6', 6" an den Schließring 7 gedrückt. Die Schwenkhebel 6', 6" fahren somit durch Federkraft in die durch die Verzahnung am Schließring 7 festgelegten Einrastpositionen ein, wobei einer der beiden Schwenkhebel 6', 6", und zwar im Falle gemäß Fig. 4 der Schwenkhebel 6', in verriegelnden Eingriff mit der Einrastposition im Schließring 7 kommt. Wird dann im verriegelten Zustand ein Drehmoment über das Lenkrad 3 auf die Lenkwelle 4 aufgebracht, so sperrt der Schwenkhebel 6' die Drehbewegung und leitet die Kraft in das in der Art eines Führungskastens ausgestaltete Gehäuse 2 ein. Durch die Selbsthemmung der Schwenkhebel 6', 6" in der Verzahnung des Schließrings 7 wird das Sperrmoment direkt in das Gehäuse 2 geleitet, was von der breiten Abstützfläche der Schwenkhebel 6', 6" unterstützt wird. Da das Gehäuse 2 wiederum an der Lenkradsäule 5 befestigt ist, erfolgt letztendlich eine Drehmomentaufuahme direkt in die Lenkradsäule 5.

Wie anhand von Fig. 4 zu erkennen ist, sind die beiden Schwenkhebel 6', 6" unterschiedlich lang ausgebildet. Dadurch steht in der Einrastposition lediglich einer der Schwenkhebel 6', 6" in verriegelnden Eingriff mit der Lenkwelle 4, und zwar in der Stellung gemäß Fig. 4 der Sperrhebel 6'. Aufgrund der unterschiedlichen Länge der Schwenkhebel 6', 6" kann somit das Lenkrad 3 einen gewissen Winkel gedreht werden, bis die andere Drehrichtung mit Hilfe des Schwenkhebels 6" gesperrt wird.

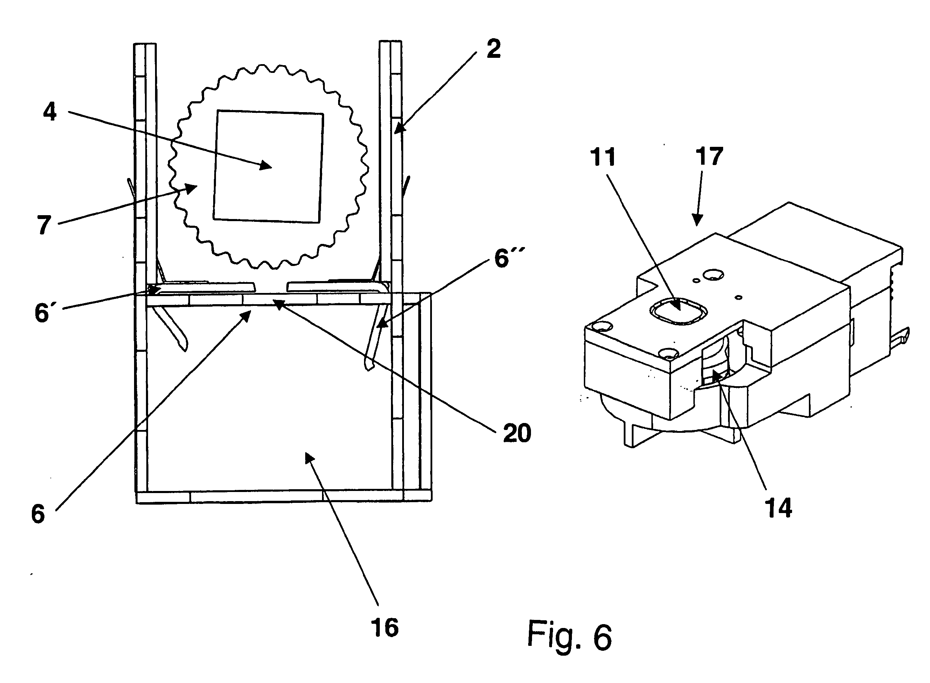

Wie anhand der Fig. 3 und Fig. 4 ersichtlich ist, wird der Schwenkhebel 6', 6" mittels eines Hubzylinders 9 und einer Druckfeder 10 zur Aktivierung der Verriegelung in Richtung der Lenkwelle 4, und damit des Schließrings 7, bewegt. Zur Deaktivierung der Verriegelung beziehungsweise Entriegelung wird der Hubzylinder 9 entgegen der von der Druckfeder 10 ausgeübten Kraft von dem Schwenkhebel 6', 6" wegbewegt. Der Schwenkhebel 6', 6" ist als ein zweiarmiger Hebel ausgestaltet, der an einem Lagerlement 20 (siehe Fig. 6) im Gehäuse 2 verschwenkbar gelagert ist. Im Hubzylinder 9 ist ein Betätiger 11 schwenkbar gelagert. Der Betätiger 11 wird mittels des Hubzylinders 9 zur Verriegelung gegen das Ende des einen Hebelarms am Schwenkhebel 6', 6" gedrückt. Die Entriegelung wird mittels eines am Hebelarm des Schwenkhebels 6', 6" befindlichen Federarms 19 unterstützt, der sich wiederum im Inneren am Gehäuse 2 abstützt.

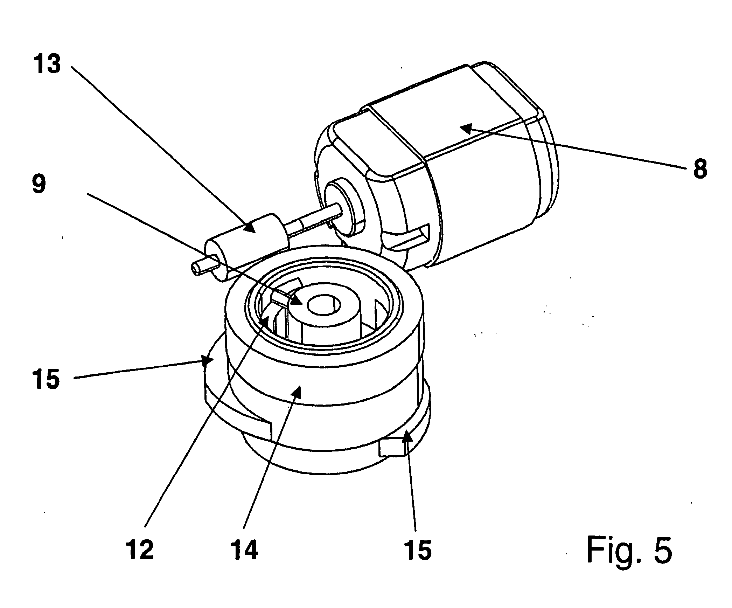

Zur Bewegung des Hubzylinders 9 zwischen der verriegelten und der entriegelten Position ist eine Hubkurve 12 vorgesehen, wie anhand von Fig. 5 zu sehen ist. Der Elektromotor 8, bei dem es sich um einen Gleichstrommotor handelt, treibt die Hubkurve 12 an. Hierzu wirkt der Gleichstrommotor 8 über ein aus einer Schnecke 13 sowie einem Schneckenrad 14 bestehendes Schneckengetriebe auf die Hubkurve 12 ein. Die Hubkurve 12 ist der kompakten Anordnung halber am Innenumfang des in der Art eines Rotors ausgestalteten Schneckenrades 14 befindlich. Bevorzugterweise ist die Hubkurve 12 in der Art einer doppelten Hubkurve ausgestaltet, womit Drehwinkel um 360° realisiert werden können. Außerdem kann dann der Elektromotor 8 zur Bewegung zwischen der verriegelten und der entriegelten Position immer in die gleiche Richtung drehen, was dessen Ansteuerung erleichtert.

Am Außenumfang des Schneckenrades 14 befinden sich in Fig. 3 sichtbare Nocken 15. Mittels der Nocken 15 werden die beiden Schwenkhebel 6', 6" in der entriegelten Position auf dem Schneckenrad 14 gedrückt gehalten sowie gesichert. Damit ist ein ungewolltes Verriegeln der Lenkwelle 4 durch die Schwenkhebel 6', 6" während der Fahrt des Kraftfahrzeugs mit Sicherheit verhindert. Somit ist sichergestellt das die Position entriegelt erreicht wurde und die Schwenkhebel 6', 6" gesichert sind. Die verriegelte und/oder die entriegelte Position der Lenkungsverriegelung 1 wird schließlich mittels Hallsensoren, elektrische Schalter, Schnappschalter o. dgl., die jedoch nicht weiter gezeigt sind, detektiert. Damit ist ein zuverlässiges Erkennen der jeweiligen Position der Lenkungsverriegelung 1, insbesondere also ein sicheres Erkennen der Position entriegelt, ermöglicht.

Wie weiter in Fig. 6 zu sehen ist, realisiert die elektrische Lenkungsverriegelung 1 durch deren komponentenweisen Aufbau eine Art von Einschublösung. In das als Führungskasten ausgestaltete Gehäuse 2, das an der Lenkradsäule 5 befestigt ist, sind die als Sperrelemente dienenden Schwenkhebel 6', 6" für das Sperren der Lenkwelle 4 integriert. Üblicherweise wird das Gehäuse 2 aus Gründen der Diebstahlsicherheit aus Metall hergestellt. Der Antrieb für die elektrische Lenkungsverriegelung 1, der unter anderem den Elektromotor 8, die Schnecke 13, das Schneckenrad 14 sowie den Hubzylinder 9 mitsamt Betätiger 11 umfaßt, besteht aus einem separaten Bauteil 17, das in einen Einschubbereich 16 in das Gehäuse 2 eingesetzt ist und dort direkt die Schwenkhebel 6', 6" im Gehäuse 2 bewegt. Das separat herstellbare Bauteil 17 benötigt lediglich ein kostengünstiges Kunststoffgehäuse, da dieses nach Montage insoweit durch das Gehäuse 2 geschützt ist.

Wie bereits erwähnt, wird der Elektromotor 8 für den Antrieb der Lenkungsverriegelung 1 von der Batterie im Kraftfahrzeug mit Spannung versorgt. Erfindungsgemäß liegt jedoch am Elektromotor 8 nicht die volle Batteriespannung an, vielmehr wird der Elektromotor 8 mittels Pulsweitenmodulation (PWM) derart angesteuert, daß am Elektromotor 8 eine in Bezug auf die Batteriespannung reduzierte Grenzspannung anliegt. Durch den Einsatz der Pulsweitenmodulation kann die anliegende Spannung auf beispielsweise ca. 9 V bis gegebenenfalls 12 V reduziert werden. Somit können die mechanischen Komponenten in der Lenkungsverriegelung 1, wie das Schneckengetriebe und die sonstigen Antriebselemente schwächer sowie gegebenenfalls auch kleiner dimensioniert werden. Insbesondere besteht keine Notwendigkeit, diese - wie bisher erforderlich - für 26 V auszulegen, da die sogenannte "JUMPSTART"-Forderung entfällt.

Es kann sich weiterhin anbieten, daß die am Elektromotor 8 anliegende Spannung ausgewertet wird. Hierzu eignet sich eine nicht weiter gezeigte Elektronik, die an sich der Ansteuerung des Elektromotors 8 dient. Die Elektronik ist im Gehäuse 2 der Lenkungsverriegelung 1, und zwar im separaten Bauteil 17 angeordnet. Für die Elektronik kann ein Mikroprozessor verwendet werden. Die Reduzierung der Spannung für den Elektromotor 8 auf die Grenzspannung erfolgt dann ebenfalls mittels der Elektronik.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann eine derartige Lenkungsverriegelung nicht nur an der Lenkradsäule sondern auch als Verriegelungseinrichtung an einem sonstigen funktionsrelevanten Betriebsaggregat des Kraftfahrzeugs Verwendung finden. Bei einem solchen Betriebsaggregat kann es sich beispielsweise um den Getriebeschalthebel, um den Wählhebel für ein Automatikgetriebe, um den Anlasser o. dgl. handeln.

### Bezugszeichen-Liste:

- 1:: elektrische Lenkungsverriegelung
- 2:: Gehäuse (für Lenkungsverriegelung)
- 3:: Lenkrad
- 4:: Lenkwelle
- 5:: Lenkradsäule
- 6:: Sperrglied
- 6', 6":: Schwenkhebel
- 7:: Schließring
- 8:: Elektromotor / Gleichstrommotor
- 9:: Hubzylinder
- 10:: Druckfeder
- 11:: Betätiger
- 12:: Hubkurve
- 13:: Schnecke
- 14:: Schneckenrad
- 15:: Nocken
- 16:: Einschubbereich (in Gehäuse)
- 17:: Bauteil (Antrieb für Lenkungsverriegelung)
- 18:: Lenkstockschalter
- 19:: Federarm
- 20:: Lagerelement

## Patentansprüche

1. Elektrische Lenkungsverriegelung für ein Kraftfahrzeug mit einem bewegbaren Sperrglied (6), das in oder außer verriegelnden Eingriff mit einer Einrastposition an der Lenkwelle (4) in der Lenkradsäule (5) bringbar ist, und mit einem Antrieb für die Bewegung des Sperrglieds (6), wobei das Sperrglied (6) mehrere Einrastpositionen für das Sperren der Lenkwelle (4) besitzt, die in der Art eines an der Lenkwelle (4) befindlichen Zahnkranzes oder Schließrings (7) ausgestaltet sind, wobei das Sperrglied (6) aus zwei schwenkbar gelagerten Schwenkhebeln (6', 6") besteht, und wobei die beiden Schwenkhebel (6', 6") zur Verriegelung in Richtung der Lenkwelle (4) bewegbar sind, **dadurch gekennzeichnet, daß** der Schwenkhebel (6', 6") als ein zweiarmiger Hebel ausgestaltet ist, und daß die beiden Schwenkhebel (6', 6") unterschiedlich lang sind, derart daß bei Verriegelung lediglich einer der Hebelarme der Schwenkhebel (6', 6") in Eingriff mit einer der Einrastpositionen in der Lenkwelle (4) steht.

2. Elektrische Lenkungsverriegelung nach Anspruch 1, **dadurch gekennzeichnet, daß** zur Aktivierung der Verriegelung der Schwenkhebel (6', 6") mittels eines Hubzylinders (9) und einer Druckfeder (10) in Richtung der Lenkwelle (4), insbesondere in eine verriegelte Position, bewegt wird, und daß vorzugsweise zur Deaktivierung der Verriegelung der Hubzylinder (9) entgegen der von der Druckfeder (10) ausgeübten Kraft von dem Schwenkhebel (6', 6"), insbesondere in eine entriegelte Position, wegbewegt wird.

3. Elektrische Lenkungsverriegelung nach Anspruch 1 oder 2, **dadurch gekennzeichnet, daß** der Schwenkhebel (6', 6") in der Art eines Schwenkblechs ausgestaltet ist, daß vorzugsweise ein Betätigter (11) schwenkbar im Hubzylinder (9) gelagert ist, und daß weiter vorzugsweise der Betätiger (11) zur Verriegelung mittels des Hubzylinders (9) gegen das Ende des einen Hebelarms des Schwenkhebels (6', 6") gedrückt wird.

4. Elektrische Lenkungsverriegelung nach Anspruch 1, 2 oder 3, **dadurch gekennzeichnet, daß** zur Bewegung des Hubzylinders (9) zwischen der verriegelten und der entriegelten Position eine Hubkurve (12), insbesondere eine doppelte Hubkurve (12), vorgesehen ist, daß vorzugsweise ein Elektromotor (8), beispielsweise ein Gleichstrommotor, die Hubkurve (12) antreibt, und daß weiter vorzugsweise der Elektromotor (8) über ein Getriebe, beispielsweise ein aus einer Schnecke (13) sowie einem Schneckenrad (14) bestehendes Schneckengetriebe, auf die Hubkurve (12) einwirkt, wobei insbesondere die Hubkurve (12) am Innenumfang des in der Art eines Rotors ausgestalteten Schneckenrades (14) befindlich ist.

5. Elektrische Lenkungsverriegelung nach einem der Ansprüche 1 bis 4, **dadurch gekennzeichnet, daß** die beiden Schwenkhebel (6', 6") mittels Nocken (15) in der entriegelten Position gehalten und/oder gesichert sind, um ein ungewolltes Verriegeln der Lenkwelle (4) während der Fahrt zu verhindern, und daß vorzugsweise der Nocken (15) am Schneckenrad (14), insbesondere an dessen Außenumfang, befindlich ist.

6. Elektrische Lenkungsverriegelung nach einem der Ansprüche 1 bis 5, **dadurch gekennzeichnet, daß** die verriegelte und/oder die entriegelte Position mittels eines Hallsensors, eins elektrischen Schalters, eines Schnappschalters o. dgl. detektiert wird.

7. Elektrische Lenkungsverriegelung nach einem der Ansprüche 1 bis 6, **dadurch gekennzeichnet, daß** die Schwenkhebel (6', 6") in einem in der Art eines Führungskastens ausgestalteten, an der Lenkradsäule (5) befestigten Gehäuse (2) angeordnet sind, und daß vorzugsweise der aus dem Elektromotor (8), dem Getriebe, dem Hubzylinder (9) sowie dem Betätiger (11) bestehende Antrieb als separates Bauteil (17) in das Gehäuse (2) eingesetzt ist.

8. Elektrische Lenkungsverriegelung nach einem der Ansprüche 1 bis 7, **dadurch gekennzeichnet, daß** das Gehäuse (2) aus Metall besteht, und daß vorzugsweise der Antrieb als separates Bauteil (17) ein Kunststoffgehäuse besitzt.

9. Elektrische Lenkungsverriegelung nach einem der Ansprüche 1 bis 8, **dadurch gekennzeichnet, daß** der Antrieb für die Bewegung des Sperrglieds (6) einen von der Batterie im Kraftfahrzeug mit elektrischer Spannung versorgten Elektromotor (8) aufweist, und daß der Elektromotor (8) mittels Spannungspulsen in der Art einer Pulsweitenmodulation angesteuert wird, insbesondere derart daß am Elektromotor (8) eine vorgebbare, in Bezug auf die Batteriespannung reduzierte Grenzspannung anlegt.

10. Elektrische Lenkungsverriegelung nach Anspruch 9, **dadurch gekennzeichnet, daß** die am Elektromotor (8) anliegende elektrische Spannung ausgewertet wird, daß vorzugsweise die Lenkungsverriegelung (1) eine Elektronik, insbesondere einen Mikroprozessor, aufweist, und daß weiter vorzugsweise die Reduzierung der elektrischen Spannung am Elektromotor (8) mittels der Elektronik auf die Grenzspannung erfolgt.

11. Elektrische Lenkungsverriegelung nach Anspruch 9 oder 10, **dadurch gekennzeichnet, daß** die am Elektromotor (8) anliegende Grenzspannung mittels Pulsweitenmodulation auf ca. 9 V begrenzt wird.

## Claims

1. Electric steering lock for a motor vehicle, with a movable locking element (6) which can be brought Into or out of locking engagement with a locking position on the steering shaft (4) in the steering wheel column (5), and with a drive for the movement of the locking element (6), wherein the locking element (6) has a plurality of locking positions for the locking of the steering shaft (4), the locking positions being designed in the fashion of a toothed ring or locking ring (7) located on the steering shaft (4), wherein the locking element (6) comprises two swivel-mounted pivoting levers (6', 6"), and wherein for locking the two pivoting levers (6', 6") can be moved in the direction of the steering shaft (4), **characterized in that** the pivoting lever (6', 6") is designed as a double-armed lever, and **in that** the two pivoting levers (6', 6") are of different lengths in such a way that when locking only one of the lever arms of the pivoting levers (6', 6") engages with one of the locking positions in the steering shaft (4).

2. Electric steering lock according to Claim 1, **characterized in that** for activating the lock the pivoting lever (6', 6") is moved by means of a lift cylinder (9) and a compression spring (10) in the direction of the steering shaft (4), especially Into a locked position, and **in that** preferably for deactivating the lock the lift cylinder (9) is moved away from the pivoting lever (6', 6") against the force exerted by the compression spring (10), especially into an unlocked position.

3. Electric steering lock according to Claim 1 or 2, **characterized in that** the pivoting lever (6', 6") is designed in the fashion of a swivel plate, **in that** preferably an actuator (11) is swivel-mounted in the lift cylinder (9), and **in that** in addition preferably the actuator (11) is pressed by means of the lift cylinder (9) against the end of the one lever arm of the pivoting lever (6', 6") for locking.

4. Electric steering lock according to Claim 1, 2 or 3, **characterized in that** for moving the lift cylinder (9) between the locked position and the unlocked position provision is made for a lift cam (12), especially a double lift cam (12), **in that** preferably an electric motor (8), for example a DC motor, drives the lift cam (12), and **in that** in addition preferably the electric motor (8) acts upon the lift cam (12) via a gear, for example a worm gear comprising a worm (13) and a worm wheel (14), wherein the lift cam (12) is especially located on the inner circumference of the worm wheel (14) which Is designed In the fashion of a rotor.

5. Electric steering lock according to one of Claims 1 to 4, **characterized in that** the two pivoting levers (6', 6") are retained and/or secured in the unlocked position by means of cams (15) in order to prevent an inadvertent locking of the steering shaft (4) during travel, and **in that** preferably the cam (15) is located on the worm wheel (14), especially on its outer circumference.

6. Electric steering lock according to one of Claims 1 to 5, **characterized in that** the locked position and/or the unlocked position is, or are, detected by means of a Hall sensor, an electric switch, a snap action switch, or the like.

7. Electric steering lock according to one of Claims 1 to 6, **characterized in that** the pivoting levers (6', 6") are arranged in a housing (2) which is designed in the fashion of a guide box and fastened on the steering wheel column (5), and **in that** preferably the drive, which comprises the electric motor (8), the gear, the lift cylinder (9) and the actuator (11), is installed In the housing (2) as a separate component (17).

8. Electric steering lock according to one of Claims 1 to 7, **characterized in that** the housing (2) consists of metal, and **In that** preferably the drive, as a separate component (17), has a plastic housing.

9. Electric steering lock according to one of Claims 1 to 8, **characterized in that** for moving the locking element (6) the drive has an electric motor (8) which is supplied with voltage from the battery in the motor vehicle, and **in that** the electric motor (8) is actuated by means of voltage pulses in the fashion of a pulse width modulation, especially in such a way that a predeterminable limit voltage, which is reduced in relation to the battery voltage, is applied to the electric motor (8).

10. Electric steering lock according to Claim 9, **characterized in that** the voltage applied to the electric motor (8) is evaluated, **In that** preferably the steering lock (1) has an electronic unit, especially a microprocessor, and **in that** in addition preferably the reducing of the voltage applied to the electric motor (8) to the limit voltage is carried out by means of the electronic unit.

11. Electric steering lock according to Claim 9 or 10, **characterized in that** the limit voltage applied to the electric motor (8) is limited to approximately 9 V by means of pulse width modulation.

## Revendications

1. Verrouillage de direction électrique pour un véhicule automobile comprenant un relais de blocage mobile (6) qui peut être amené dans ou en dehors d'un engagement de verrouillage avec une position d'enclenchement sur l'arbre de direction (4) dans la colonne de direction (5) et comprenant un entraînement pour le déplacement du relais de blocage (6), dans lequel le relais de blocage (6) possède plusieurs positions d'enclenchement pour le blocage de l'arbre de direction (4) qui sont réalisées à la manière d'une couronne dentée ou d'un ressort d'arrêt (7) se trouvant sur l'arbre de direction (4), dans lequel le relais de blocage (6) est constitué de deux bras mobiles (6', 6") montés de façon basculante et dans lequel les deux bras mobiles (6', 6") peuvent être déplacés dans la direction de l'arbre de direction (4) en vue du verrouillage, **caractérisé en ce que** le bras mobile (6', 6") est réalisé en tant que levier à deux bras et **en ce que** les deux bras mobiles (6', 6") ont des longueurs différentes, de telle sorte que lors du verrouillage, un seul des bras de levier des bras mobiles (6', 6") est en engagement avec une des positions d'enclenchement dans l'arbre de direction (4).

2. Verrouillage de direction électrique selon la revendication 1, **caractérisé en ce qu'**en vue de l'activation du verrouillage, le bras mobile (6', 6") est déplacé dans la direction de l'arbre de direction (4), en particulier dans une position verrouillée, au moyen d'un vérin de relevage (9) et d'un ressort de pression (10), et **en ce que** de préférence en vue de la désactivation du verrouillage, le vérin de relevage (9) est déplacé par le bras mobile (6', 6"), en particulier dans une position déverrouillée, contre la force exercée par le ressort de pression (10).

3. Verrouillage de direction électrique selon la revendication 1 ou 2, **caractérisé en ce que** le bras mobile (6', 6") est réalisé à la manière d'une tôle basculante, **en ce que** de préférence, un actionneur (11) est monté de façon basculante dans le vérin de relevage (9), et **en ce qu'**également de préférence, l'actionneur (11) est comprimé contre l'extrémité d'un bras de levier du bras mobile (6', 6") au moyen du vérin de relevage (9) en vue du verrouillage.

4. Verrouillage de direction électrique selon la revendication 1, 2 ou 3, **caractérisé en ce qu'**en vue du déplacement du vérin de relevage (9) entre la position verrouillée et déverrouillée, il est prévu une came de relevage (12), en particulier une came de relevage double (12), **en ce que** de préférence, un moteur électrique (8), par exemple un moteur à courant continu, entraîne la came de relevage (12), et **en ce qu'**également de préférence, le moteur électrique (8) agit sur la came de relevage (12) par le biais d'une transmission, par exemple un engrenage à vis sans fin constitué d'une vis sans fin (13) et d'une roue hélicoïdale (14), étant entendu que la came de relevage (12) se trouve en particulier sur le périmètre intérieur de la roue hélicoïdale (14) réalisée à la manière d'un rotor.

5. Verrouillage de direction électrique selon l'une quelconque des revendications 1 à 4, **caractérisé en ce que** les deux bras mobiles (6, 6") sont maintenus et/ou sécurisés dans la position déverrouillée au moyen d'un bossage (15) afin d'empêcher un verrouillage fortuit de l'arbre de direction (4) pendant la conduite et **en ce que** de préférence, le bossage (15) se trouve sur la roue hélicoïdale (14), en particulier sur son périmètre extérieur.

6. Verrouillage de direction électrique selon l'une quelconque des revendications 1 à 5, **caractérisé en ce que** la position verrouillée et/ou déverrouillée est détectée au moyen d'un capteur à effet Hall, d'un commutateur électrique, d'un interrupteur instantané ou d'un dispositif similaire.

7. Verrouillage de direction électrique selon l'une quelconque des revendications 1 à 6, **caractérisé en ce que** les bras mobiles (6', 6") sont agencés dans un logement (2) réalisé à la manière d'une boîte à guides fixé sur la colonne de direction (5) et **en ce que** de préférence, l'entraînement constitué du moteur électrique (8), de la transmission, du vérin de relevage (9) ainsi que de l'actionneur (11) est inséré dans le logement (2) à la manière d'un composant (17) distinct.

8. Verrouillage de direction électrique selon l'une quelconque des revendications 1 à 7, **caractérisé en ce que** le logement (2) est constitué de métal et **en ce que** de préférence, l'entraînement réalisé à la manière d'un composant (17) distinct possède un logement en matière plastique.

9. Verrouillage de direction électrique selon l'une quelconque des revendications 1 à 8, **caractérisé en ce que** l'entraînement comprend, pour le déplacement du relais de blocage (6), un moteur électrique (8) alimenté en tension électrique par la batterie du véhicule automobile et **en ce que** le moteur électrique (8) est commandé au moyen d'impulsions de tension à la manière d'une modulation d'impulsions en largeur, en particulier de telle sorte qu'une tension limite pouvant être prédéfinie, réduite par rapport à la tension de la batterie, est présente au niveau du moteur électrique (8).

10. Verrouillage de direction électrique selon la revendication 9, **caractérisé en ce que** la tension électrique présente au niveau du moteur électrique (8) est mesurée, **en ce que** de préférence, le verrouillage de la direction (1) comprend un système électronique, en particulier un microprocesseur, et **en ce qu'**également de préférence, la réduction de la tension électrique au niveau du moteur électrique (8) est réalisée au moyen du système électronique à la tension limite.

11. Verrouillage de direction électrique selon la revendication 9 ou 10, **caractérisé en ce que** la tension limite présente au niveau du moteur électrique (8) est limitée à environ 9 V au moyen d'une modulation d'impulsions en largeur.
